# FASCICULE DE BREVET EUROPEEN

(11) **EP 1 961 553 B1**
(45) Date de publication et mention de la délivrance du brevet: **06.04.2011**
(21) Numéro de dépôt: 08300072.9
(22) Date de dépôt: 05.02.2008
(51) Int. Cl.: E04F 15/10, B32B 5/26, B32B 5/18, B32B 17/04, B32B 27/36

(54) **Revêtement de sol à double armature enroulable**
Aufrollbare Bodenverkleidung mit Doppelarmierung
Rollable floor covering with double reinforcement

(30) Priorité: 09.02.2007 FR 0753165
(43) Date de publication de la demande: 27.08.2008
(73) Titulaire: GERFLOR, 69100 Villeurbanne (FR)
(72) Inventeur: Hinault, Robert, 69380, MARCILLY D'AZERGUES (FR); Rivat, Alain, 69170, LES SAUVAGES (FR)
(74) Mandataire: Dupuis, François

(56) Documents cités:
- EP-A- 0 285 533
- WO-A-02/10504
- DE-A1- 10 130 217
- FR-A1- 2 640 288
- FR-A1- 2 681 284
- US-A- 4 698 258

## Description

L'invention se rattache au secteur technique des revêtements de sol comprenant une double armature de rigidification et enroulable. Ces armatures sont du type réalisées en nappe en matériau polyester non-tissé.

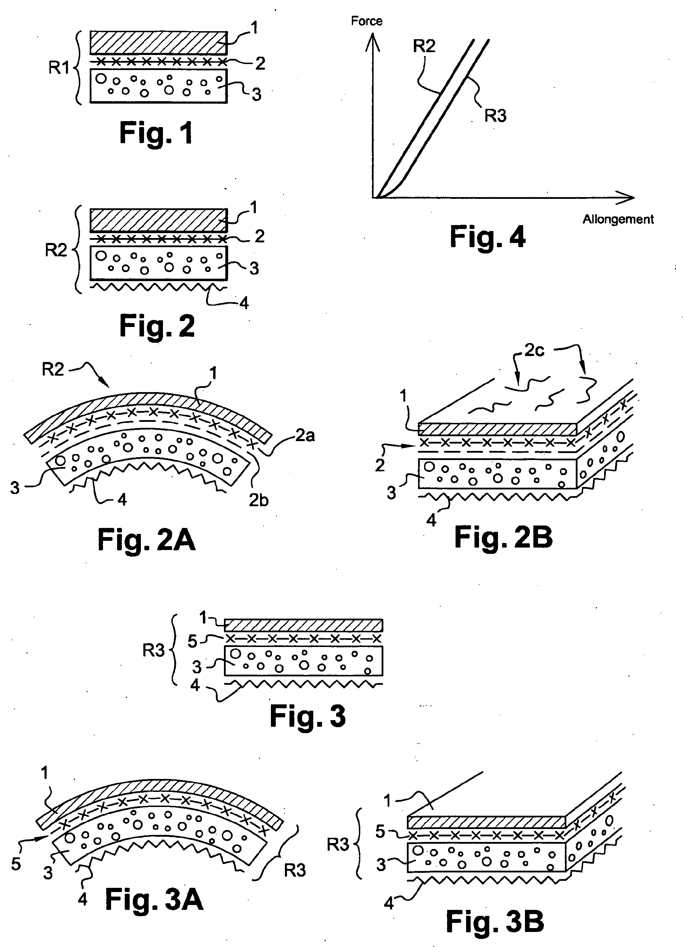

A l'origine et en se référant à la figure 1, le revêtement (R1) est du type comprenant une feuille d'épaisseur contrôlée -typiquement de 0,5 à 3mm- d'une dureté shore A comprise entre 60 et 90 réalisée par les techniques connues de la transformation des polymères thermoplastiques : enduction ; calandrage ; extrusion. De préférence, le polymère utilisé est le PVC plastifié mais tout autre polymère thermoplastique est utilisable. Le revêtement inclut sur sa face envers une armature (2) constituée par un non tissé polyester collé sur une grille de verre. Spécifiquement, le non tissé a un poids de 15 à 40g/m² préférentiellement 25g/m² et la grille de verre est constitué de fils de verre. Ceux-ci ont un titre de 34 ou 68 tex distribués selon une contexture variant de 1*1 à 5*5 fils au cm en chaîne et trame avec toutes combinaisons intermédiaires possibles non symétriques. Le revêtement inclut une mousse (3) destinée à être collée au sol. Cette mousse est en PVC mais tout autre polymère thermoplastique est utilisable. Les épaisseurs de mousse vont de 1 à 1 0mm et préférentiellement de 3 à 8mm.

On connait par le document WO 02/10504 appartenant au Demandeur un revetement de sol à double armature enroulable conforme au préambule des revendications 1 or 2.

Une réglementation nouvelle DTU 13.3 a requis de supprimer toutes possibilités de disposer en envers du matériau et solidairement avec la mousse un envers non tissé susceptible de permettre l'utilisation de colles résistantes à l'humidité impossibles à utiliser avec un envers non revêtu d'un non tissé. L'explication tient au fait que l'adhérence des colles résistantes à l'humidité (PU 2 composants ou PU/Epoxy 2 composants par exemple) ont une adhérence très faible sur le PVC plastifié. D'autre part, elles n'ont pas de « tack » ce qui rend la pose du revêtement impossible.

Pour répondre à cette contrainte réglementaire, la solution a donc été de disposer en envers du matériau de revêtement un envers non-tissé susceptible de constituer un écran avec la partie endroit du revêtement et d'absorber la pénétration de colle.

Dans le cas des matériaux de faible épaisseur et sans sous-couche mousse, le problème est résolu facilement par la lamination d'une structure non-tissée sur l'envers du matériau de surface.

Par contre, pour les matériaux avec sous-couche mousse, une première difficulté rencontrée provient du fait que l'épaisseur de la mousse empêche ou gêne la flexion du matériau par l'effet bilame des deux armatures. En se référant ainsi à la figure 2 des dessins, le revêtement (R2) répondant à cette définition comprend une feuille calandrée (1) en une ou plusieurs épaisseurs, une structure du type décrite pour le revêtement (R1) en y ajoutant une seconde armature (4) en matériau polyester non-tissé du même type avec une grille et une nappe non tissée en polyester.

Un problème posé par ce type de revêtement réside dans le fait que la double armature formant bilame empêche l'enroulement homogène du revêtement. On a ainsi représenté figure 2A le revêtement (R2) de la figure 2 en phase d'enroulement, c'est-à-dire avec une forme courbée, et on a constaté sur la première armature (2) une situation de cassure et/ou de rupture du non-tissé (2b) à partir de ces fibres par rapport à la grille (2a). La figure 2B montre l'aspect résultant du revêtement déroulé avec l'apparition de défauts (2c) sur la face apparente endroit due au non-tissé déchiré. L'esthétique détériorée n'est plus acceptable par le consommateur. La traction exercée sur la partie non-tissée de la première armature lors de l'enroulement engendre le déchirement des fibres.

On a ainsi un double inconvénient de difficultés d'enroulement du revêtement sur lui-même qui provoque par la même la rupture d'une des armatures avec la perte de l'esthétique du produit.

La démarche du Demandeur a donc été de rechercher à remédier à ces inconvénients.

En pratique, et dans un premier temps, des essais ont été effectués en tenant compte de la variation d'épaisseur des différents composants du revêtement, en essayant ainsi d'améliorer la constitution de la première armature. Les résultats ne se sont pas avérés satisfaisants, les inconvénients demeurant à des degrés divers. La difficulté à résoudre était de concevoir un revêtement qui réponde aux problèmes posés, mais qui soit conçu avec une double armature pour répondre à la norme DTU 13.3.

La démarche du Demandeur a alors été d'examiner les conditions d'enroulement et des phénomènes physiques en découlant.

C'est donc à partir de ce problème posé et de cette démarche précitée que le Demandeur a pensé à modifier la structure de la première armature du revêtement, tout en conservant son principe en combinaison avec la seconde armature pour mettre en oeuvre la solution de l'invention.

Ainsi, le revêtement de sol selon l'invention, du type comprenant en face endroit une feuille calandrée d'épaisseur déterminée, une première armature, une couche de mousse et une seconde armature en matériau polyester constitué par une grille et une nappe non tissée en face envers, et est remarquable en ce que la première armature est constituée par une seule grille excluant toute adjonction de nappe textile polyester en non-tissé et similaire.

La solution apportée telle que définie répond parfaitement aux objectifs initiaux par rapport à l'art antérieur. Les essais ont démontré la constitution d'un revêtement à double armature et sous-couche de mousse facilement enroulable et sans atteinte à la qualité de son aspect visuel esthétique sur sa face endroit.

Ces caractéristiques et d'autres encore ressortiront bien de la suite de la description.
Pour fixer l'objet de l'invention illustrée d'une manière non limitative aux figures des dessins où :
- la figure 1 est une vue en coupe de la structure d'un revêtement (R1) de sol selon l'art antérieur.
- la figure 2 est une vue en coupe d'un revêtement (R1) de sol à double armature selon l'art antérieur.
- la figure 2A montre le revêtement (R2) de la figure 2 en situation d'enroulement avec l'effet de rupture de la première armature.
- la figure 2B montre le revêtement (R2) de la figure 2A après déroulement avec apparition d'effet inesthétique.
- la figure 3 montre en coupe le revêtement (R3) de la figure 3 en situation d'enroulement.
- la figure 3B montre le revêtement (R3) de la figure 3A déroulé.
- la figure 4 est un graphique illustrant la capacité d'allongement par rapport à la force de traction exercée sur la première armature constituée d'une part selon la figure 2, et d'autre part selon la figure 3.

Afin de rendre plus concret l'objet de l'invention, on le décrit maintenant d'une manière non limitative illustrée aux figures des dessins.

En se référant aux figures 3, 3A, 3B, le revêtement (R3) est du type comprenant une feuille calandrée (1) d'épaisseur déterminée, une première armature (5), une couche de mousse (3), une seconde armature (4) constituée par une grille et une nappe textile non-tissé en matériau polyester par exemple.

Selon l'invention, la première armature (5) est constituée exclusivement par une grille en verre et n'inclut pas d'autres composants tels que la nappe textile en non-tissé.

Ainsi, le revêtement selon l'invention est enroulable malgré l'effet bilame dû aux deux armatures. La grille de verre (5) qui assure la stabilité du revêtement a un module d'élasticité très élevé par rapport à la seconde armature incluant la nappe de non-tissé d'envers qui amène et permet la jonction avec la colle. De ce fait, le revêtement est enroulable sans difficulté et sans nuisance à son esthétique.

En pratique, la solution apportée par l'invention s'explique par le graphe de la figure 4 sur laquelle en abscisse est mentionnée le paramètre de l'allongement et en ordonnée celui de la traction. On constate après représentation du graphe d'allongement de la première armature (2) constituée par la grille en verre et la nappe textile non-tissé un allongement proportionnel et régulier. Cela est dû à l'étroite liaison des deux composants qui engendrent un allongement uniforme, mais de par les contraintes exercées sur la nappe textile non-tissé provoquent la rupture des fibres.

Au contraire, et selon l'invention, la première armature (5) constituée de la seule grille en verre subit le phénomène d'allongement en fonction de ses seuls paramètres. On distingue sur le graphe traction allongement deux zones ayant des pentes différentes. La première zone correspond aux contraintes (traction ou compression) exercées entre les armatures avec des allongements suffisants pour éviter le phénomène de cassures.

Il est ci-après donné quelques indications sur les épaisseurs des composants. La feuille calandrée à une ou plusieurs couches peut avoir une épaisseur de l'ordre de 1 à 4 mm à titre non limitatif. La couche de mousse peut être d'une épaisseur de 1 à 10 mm, préférentiellement de 3 à 8mm. La première armature (5) est constituée par une grille de verre constituée de fils de verre de titre 34 à 68 Tex répartis selon une géométrie chaîne trame classique pouvant aller de 1*1 à 5*5 fils au cm avec toutes les combinaisons possibles entre ces limites -typiquement 3*3 34 Tex ou 1.5*1.5 68 Tex. La seconde armature (4) est constituée par un non tissé polyester de 60 à 120 g/m² de type « spun bonded ».

Les avantages ressortent bien de l'invention. La solution inattendue pour résoudre le problème de s'affranchir de l'un des constituants de la première armature apporte des avantages immédiats, sans destruction des qualités intrinsèques du revêtement donné par ses composants et sans modification de son esthétique.

## Revendications

1. Revêtement de sol à double armature enroulable, du type comprenant en face endroit une feuille calandrée (1) d'épaisseur déterminée, une première armature (5), une couche de mousse (3) et une seconde armature (4) en matériau polyester constitué par une grille et une nappe non tissée en face envers, **caractérisé en ce que** la première armature (5) est constituée par une seule grille en verre excluant toute adjonction de nappe textile polyester en non-tissé et similaire.

2. Revêtement de sol à double armature enroulable, du type comprenant en face endroit une feuille calandrée (1) d'épaisseur déterminée, une première armature (5), une couche de mousse (3) et une seconde armature (4) en matériau polyester constitué par une grille et une nappe non tissée en face envers, **caractérisé en ce que** la première armature (5) est constituée par une seule grille en verre.

3. Revêtement de sol à double armature selon l'une quelconque des revendications 1 et 2 **caractérisé en ce que** l'armature (5) est constituée par une grille de verre constituée de fils de verre de titre 34 à 68 Tex répartis selon une géométrie chaîne trame pouvant aller de 1* 1 à 5*5 fils au cm.

## Claims

1. Floor covering having a double rollable reinforcement of the type comprising, on the front, a calendared sheet (I) of predefined thickness, a first reinforcement (5), a layer of foam (3) and a second reinforcement (4), made of polyester material comprising a grid and a non-woven layer on the back, **characterized in that** first reinforcement (5) exclusively comprises a glass grid excluding any additional non-woven and similar polyester textile layer.

2. Floor covering having a double rollable reinforcement of the type comprising, on the front, a calendared sheet (I) of predefined thickness, a first reinforcement (5), a layer of foam (3) and a second reinforcement (4), made of polyester material comprising a grid and a non-woven layer on the back, **characterized in that** first reinforcement (5) exclusively comprises a glass grid.

3. Floor covering having a double reinforcement as claimed in either claim 1 or 2, **characterised in that** reinforcement (5) comprises a glass grid containing glass yarns with tex size 34 to 68 distributed in a warp weft geometry of up to 1*1 to 5*5 yarns per centimetre.

## Patentansprüche

1. Bodenbelag mit doppelter aufrollbarer Armierung nach Art derjenigen mit einer kalandrierten Folie (1) mit bestimmter Dicke auf der Vorderseite, einer ersten Armierung (5), einer Schaumstoffschicht (3) und auf der Rückseite einer zweiten Armierung (4) aus Polyestermaterial, das aus einem Gittergewebe und einer Vliesstoffbahn besteht, **dadurch gekennzeichnet, dass** die erste Armierung (5) allein aus einem Glasgittergewebe unter Ausschluss jeglicher Hinzufügung einer Polyester-Textilbahn aus Vliesstoff o. ä. besteht.

2. Bodenbelag mit doppelter aufrollbarer Armierung nach Art derjenigen mit einer kalandrierten Folie (1) mit bestimmter Dicke auf der Vorderseite, einer ersten Armierung (5), einer Schaumstoffschicht (3) und auf der Rückseite einer zweiten Armierung (4) aus Polyestermaterial, das aus einem Gittergewebe und einer Vliesstoffbahn besteht, **dadurch gekennzeichnet, dass** die erste Armierung (5) allein aus einem Glasgittergewebe besteht.

3. Bodenbelag mit doppelter Armierung nach einem der Ansprüche 1 und 2, **dadurch gekennzeichnet, dass** die Armierung (5) aus einem Glasgittergewebe besteht, das aus Glasgarnen mit einem Titer von 34 bis 68 tex gebildet ist, die nach einem Flächengebilde aus Kette und Schuss von 1*1 - 5*5 Fäden/cm verteilt sind.
